# EUROPEAN PATENT APPLICATION

(11) **EP 1 860 143 A1**
(43) Date of publication of application: **28.11.2007**
(21) Application number: 06114472.1
(22) Date of filing: 24.05.2006
(51) Int. Cl.: C08J 9/36, B29C 44/56, C08J 5/18

(54) **Flexible sheet material from thermo-compressing polyurethane foam and application methods using such material**

(71) Applicant: Recticel, 1140 Brussel (Evere) (BE)
(72) Inventor: Van Langendonck, Bert, 9230, Wetteren (BE)
(74) Representative: Leherte, Georges M.L.M.

(57) **Abstract**

The invention relates to a new sheet material made from thermo-compressed flexible polyurethane foam, which sheet material has an elongation at break (ISO 1798) of at least 200 %, a tensile strength (ISO 1798) of at least 300 kilopascal (kPa), and a thickness of less than 1,5 mm, as well as to a method for manufacturing female underwear and/or garment articles, from such sheet material.

## Description

The invention relates to a new flexible and stretchable sheet material obtained from flexible polyurethane foam.
In the clothing industry, and in particular in the female underwear / garment industry, there is an ever increasing need for fabrics with 'tailored' properties matching the high-tech, high speed production methods used to meet the highly competitive cost requirements of this industry.

Sliced polyurethane foam sheet materials are being abundantly used for various applications in the female underwear / garment industry, but these materials involve several drawbacks.
One drawback results from the fact that in practice polyurethane foams cannot be sliced to thicknesses of less than 1,6 mm without severely suffering from their poor mechanical properties. This makes the sliced foam materials unsuitable for processing in standard "fabric mould thermo-formation" techniques. The poor mechanical properties also cause problems in "foam mould thermo-compression" techniques as well as fabric mould thermo-formation" techniques, to the extent that the material tears too easily when being stretched over a mould (such as a brassiere cup mould) before being thermo-compressed or thermo-formed.

This invention now provides a new type of flexible and stretchable sheet material (which can broadly be referred to as a "fabric" or "cloth" material, in essence a felt-type "fabric" or "cloth" material), resulting from a thermo-compression ("felting") operation of a polyurethane foam material.
This new flexible and stretchable sheet material is readily applicable in conventional as well as innovative techniques for manufacturing female underwear and garments.

Sheet materials consisting of *thermo-compressed polyurethane foam* are known as such, for instance, from GB 1.063.463, GB 1.240.733, GB 1.285.531, GB 1.330.980, US 5.405.563, WO 2004/058864.
The materials disclosed in these documents (typically of the artificial leather type) are of a different nature (being in particular poorly flexible and stretchable) and/or texture than those concerned by the invention.

The flexible and stretchable material provided by the present invention has properties more comparable to those of so called 'spacer fabrics' and of elastane / spandex-type fabrics (such as "LYCRA"). In preferred embodiments of the invention the new material according to the invention also involves an excellent breathability.
The new material is however considerably less expensive to produce than spacer fabrics and spandex or elastane type fabrics.

The properties of the new sheet material aimed at by the invention are particularly those making the material suitable for female underwear / garment (such as "apparel" or "brassieres" and the like) manufacture.
These properties also make the new material particularly suitable for a variety of totally new possibilities for their specific application, such as
- in "fabric mould thermo-formation" methods, by shaping the new sheet material itself or a textile laminate of the new sheet material, in simple thermo-formation moulds,
- in "textile lamination / cut and sew" methods, by assembling pieces of the new sheet material and/or of textile laminates of the new sheet material,
- in "textile lamination / foam mould thermo-compression" methods, involving modeling PU-foam parts together with the new sheet material itself or with textile laminates of the new sheet material, in more complex thermo-compression moulds,
- in the manufacture of "wings", "shoulderstraps", "hook & eye" tapes, etc. for female underwear, and/or in the manufacture of one-piece brassieres produced from a single material on mould equipment.

The use of the new sheet material according to the invention for the manufacture of female underwear / garment distinguishes fundamentally from the known use of sliced polyurethane foam sheets, in particular in that
- in practice sliced polyurethane foam sheets need to have a thickness above 1,6mm (typically about 2-5 mm), which allows their use for mould thermo-compression techniques, but makes them unsuitable for direct fabric mould thermo-formation techniques;
- sliced polyurethane foam sheets show a very poor tensile and/or tear strength and poor elasticity (ultimate elongation or elongation at break), so that even in mould compression techniques (for which the foam sheets are considered well appropriate) the material leads to tearing problems (in particular when the foam sheets are stretched over cup moulds before the actual thermo-compression step, during the manufacture of shaped brassiere cups, as disclosed for instance in US 4.250.137 and US 2006/0043636) ;
- the new sheet material according to the invention offers highly desirable properties, in particular in respect of resistance, strength and "touch", which makes it more comparable to "textile", rather than to foam material from which it results ;
- the new sheet material according to the invention can optionally be used without being laminated with textile, whereas sliced polyurethane foam sheets inherently require textile lamination for their application in underwear manufacture.

The application methods of "fabric mould thermo-formation", of "textile lamination / cut and sew", of "textile lamination / foam mould thermo-compression", etc., referred to here above, as commonly used in the female apparel industry, and in particular the difference between fabric mould thermo-formation techniques on the one hand and foam mould thermo-compression techniques are well known per se to those skilled in that industry. Reference may be made in this respect to, for instance,
US 4.250.137, US 4.992.074, US 6.257.751, GB 2.363.054, EP 1.440.626 and W003103920.
Particular reference may also be made to the disclosure of US 2006/0043636, in particular paragraph [0009] describing the use of mould thermo-formation of foam pads and the choice of specific polyurethane foam materials for manufacturing female underwear.

To achieve the objectives as referred to above, the invention provides a sheet material consisting of thermo-compressed flexible polyurethane foam which specifically has
an elongation at break of at least 200 %, measured according to ISO 1798, a tensile strength of at least 300 kPa, measured according to ISO 1798, and a thickness of less than 1,5 mm.

The properties of the new material result from a specific selection of the starting polyurethane foam submitted to a thermo-compression operation, more specifically to a roll thermo-compression operation.
Starting materials preferably comprise aliphatic polyisocyanate based polyurethane foams.
The compression (compression ratio) applied during the thermo-compression operation is preferably at least 2, most preferably at least 3.
The expression "roll thermo-compression" as used in this specification refers to a hot rolling / calendering / roll-pressing operation, as it is well known in itself.

According to a preferred embodiment of the invention the sheet material results from thermo-compressing a flexible polyurethane foam having one or more of the following characterizing features :

| | |
|---|---|
| net density (according to ISO 845) | 20-75 kg/m³ |
| (according to ISO 3386/1) | |
| (according to ISO 3386/1) | < 7,5 kPa |

and more particularly from a flexible polyurethane foam having one or more of the following characterizing features :

| | |
|---|---|
| net density (according to ISO 845) | 20-50 kg/m³ |
| compression resistance 40% | |
| (according to ISO 3386/1) | from 1,0 to 7,5 kPa, |
| | preferably from 1,0 to 5,2 kPa |

In order to avoid "yellowing" over time of underwear / garment articles produced with the sheet material according to the invention, the polyurethane sheet material preferably results from thermo-compressing a flexible polyurethane foam presenting a

| | |
|---|---|
| light stability test (according to ISO 105 B02) | ≥ 5 on blue scale, |
| most preferably | ≥ 6 on blue scale |

According to further preferred features of the invention, the starting flexible polyurethane foams may most preferably involve one or several of the following additional properties:

| | |
|---|---|
| Air Perm. at 10mm - 200 Pa - 20 cm² | |
| (according to ISO 9237) | at least equal to 50 I/min.dm², typically up to 1000 I/min.dm² (and even more) |
| Elongation at break | |
| (according to ISO 1798) | 200-300 % |

| | |
|---|---|
| Tensile Strength | |
| (according to ISO 1798) | 150- 200 kPa |
| Compression Set 50% | |
| (according to ISO 1856/A) | typically ~5 % |
| Burnt gas fume test | |
| (according to ATTCC23) | 3-4 on grey scale |

According to a further optional embodiment of the invention the sheet material results more specifically from a thermo-compressed flexible polyurethane foam which has been submitted to a cell opening operation (preferably so as to reach an open cell proportion of at least 50%, typically at least 90 %) prior to the thermo-compressing step. The sheet material resulting from such an 'open cell' foam exhibits particularly interesting "breathability" as well as stretchability properties. This breathability property is a highly preferred feature for in particular undergarment applications.
The invention also relates to the application / use of the new material according to the invention for manufacturing female underwear and/or garment articles, as such and/or as textile laminates.

In preferred embodiments of the application methods according to the invention the new material is used, as such and/or as textile laminate (i.e. a laminate comprising a layer of the sheet material according to the invention and a textile layer), in direct fabric mould thermo-formation techniques for the manufacture of female underwear and/or garment articles.
The expression "used as such" as used in the present context refers to the use of the new flexible and stretchable polyurethane sheet material without involving an additional textile layer.
The expression "direct fabric thermo-formation" processes or techniques as used in the present context refers to techniques and apparatus well known in the art, as typically exemplified by the disclosure of US patent 3.058.154, US patent 3.202.565 and international patent publication WO 2005/005138, the contents of which are incorporated herein in as far as such disclosure is deemed essential for the understanding of the present invention.

The new material according to the invention thus, in particular, allows for the very convenient design and manufacture of "one-piece brassieres", and for the manufacture of inexpensive high quality underwear parts and accessories for female underwear, such as one piece "wings", "shoulderstraps", "hook & eye" tapes, etc.

### Detailed description of the invention

According to the state of the art in female apparel manufacture several techniques among which "fabric mould thermo-formation", "textile lamination / cut and sew", "textile lamination / foam mould thermo-compression", etc., as referred to here above, are commonly being used, either alone or in various combinations.
The main innovation of the invention resides in providing a new material that can be used in each of these techniques to provide new design and application possibilities in this industry.
Whereas the state of the art involved
the use of textiles for producing molded textile parts for the apparel production (by fabric mould thermo-formation), and/or
the use of textiles and/or spacer materials / fabrics for producing cut and sew apparel parts, and/or
the use of sliced polyurethane foam sheet materials (with a thickness above 1,6 mm), either alone or together with textiles and/or spacer materials, for producing cut and sew / textile lamination apparel parts (partly by foam mould thermo-compression techniques),
the methods for producing garment articles, according to the invention involve direct fabric mould thermo-formation techniques of the new thermo-compressed material (having a thickness of less than 1,5 mm, preferably of less than 1 mm.), as such or as a textile laminate.

The new material according to the invention has highly desirable properties in respect of its surprising combination of excellent tensile strength, stretchability, and durability.
This mix of properties, associated to the light stability, breathability and washability of the preferred embodiments of the invention, makes the material particularly suitable for garment applications, such as in particular swim wear.

Further details of the invention result from the following currently "best mode example" for producing the new material according to the invention :
a polyurethane foam material as manufactured and marketed by the company RECTICEL under the designation BULFAST TO 51 M, as a PU foam roll material with a typical thickness of 5 mm,
having the following typical product specifications :

| | |
|---|---|
| net density (according to ISO 845) | 44 kg/m³ |
| compression resistance 40% | |
| (according to ISO 3386/1) | < 2 kPa |
| Light stability test (according to ISO 105 B02) | ≥ 6 on blue scale |
| Air Perm. (according to ISO 9237) | ~ 1000 I/min.dm² |
| Elongation at break (according to ISO 1798) | 270 % |
| Tensile Strength (according to ISO 1798) | 180 kPa |
| Compression Set 50% | |
| (according to ISO 1856/A) | 5 % |
| Burnt gas fume test (according to ATTCC23) | 3-4 on grey scale |

is submitted to a thermo-compression operation on a commercial 275 ton compression machine type from the company AGILLA,
operated under the following conditions :
compression to a final thickness of 1,0 mm
   (thus involving a compression ratio of approximately 3)
temperature: 170-180° C
compression time : approximately 40 sec.
compression pressure : approximately 36 bar

The resulting compressed sheet material has the following properties :

| | | |
|---|---|---|
| final thickness of 1,0 mm | (+ 0,1mm /-0,3 mm) | |
| Elongation at break | > 300 % | (ISO 1798) |
| Tensile Strength | > 500 kPa | (ISO 1798) |
| Air permeability | | |
| (1mm - 200 Pa - 20 cm²) | > 300 l/min.dm² | (ISO 9237) |
| Net density | 200-270 kg/m³ | (ISO 845) |
| Light stability (UV WOM) | ≥ 6 | (ISO 105 B02, blue scale) |

The material can very suitably be used as a fabric material (comparable to a spandex / elastane type fabric) for any clothing application, in particular for garment articles, using techniques known per se in this type of industry and as specifically set forth in accordance with the invention.

## Claims

1. Sheet material consisting of thermo-compressed flexible polyurethane foam, **characterized by**
an elongation at break (ISO 1798) of at least 200 %,
a tensile strength (ISO 1798) of at least 300 kilopascal (kPa), and
a thickness of less than 1,5 mm

2. Sheet material according to claim 1, **characterized by**
an ultimate elongation (ISO 1798) of at least 300 %, and/or
a tensile strength (ISO 1798) of at least 500 kilopascal (kPa)

3. Sheet material according to any one of claims 1 and 2, **characterized by** a thickness of less than 1,2 mm

4. Sheet material according to any one of the preceding claims, **characterized by** an air permeability of at least 250 I/min.dm² (ISO 9237), preferably at least 500 I/dm².

5. Sheet material according to any one of claims 1 and 2, **characterized by** a light stability test of at least 5 on blue scale (ISO 105 B 02).

6. Sheet material according to any one of the preceding claims, **characterized in that** it results from a thermo-compression operation of an aliphatic polyisocyanate based polyurethane foam, at a compression of at least 2, preferably at least 3.

7. Sheet material according to claim 6, **characterized in that** it results from a roll thermo-compression operation.

8. Sheet material according to any one of the preceding claims **characterized in that** said sheet material results from thermo-compressing a flexible polyurethane foam having one or several feature(s) selected from :
| | |
|---|---|
| a net density (ISO 845) | 20-75 kg/m³, and |
| a compression resistance 40 % | |
| (ISO 3386/1) | < 7,5 kPa, |

9. Sheet material according to any one of the preceding claims **characterized in that** said sheet material results from thermo-compressing a flexible polyurethane foam having one or several feature(s) selected from :
| | |
|---|---|
| a net density (ISO 845) | 20-50 kg/m³, |
| a compression resistance 40 % | |
| (ISO 3386/1) | from 1,0 to 7,5 kPa, |
| preferably | from 1,0 to 5,2 kPa, |
| an elongation at break (ISO 1798) | 200-300 %, and |
| a tensile Strength (ISO 1798) | 150-200 kPa, |

10. Sheet material according to any one of the preceding claims **characterized in that** said sheet material results from thermo-compressing a flexible polyurethane foam presenting a light stability test
| | |
|---|---|
| (according to ISO 105 B 02) | ≥ 5 on blue scale |

11. Sheet material according to any one of the preceding claims, **characterized in that** the sheet material results from a thermo-compressed open cell flexible polyurethane foam, comprising at least 90 % open cells.

12. Method for manufacturing female underwear and/or garment articles, **characterized in that** a sheet material according to any one of claims 1-11 is used.

13. Method according to claim 12, **characterized in that** the sheet material is used as such.

14. Method according to claim 12, **characterized in that** the sheet material is used as textile laminate, comprising a layer of the sheet material according to the invention and a textile layer.

15. Method according to claim 13, **characterized in that** the sheet material is used in a direct fabric mould thermo-formation process.

16. Method according to claim 14, **characterized in that** the sheet material is used in a direct fabric mould thermo-formation process.

17. Clothing article, in particular female underwear or garment article, comprising a sheet material according to any one of claims 1-11.
